# EUROPEAN PATENT SPECIFICATION

(11) **EP 3 955 430 B1**
(45) Date of publication and mention of the grant of the patent: **09.10.2024**
(21) Application number: 20787306.8
(22) Date of filing: 16.03.2020
(51) Int. Cl.: H02K 1/28, F03D 1/06, H02K 1/2791, H02K 7/18, H02K 15/03

(54) **MAGNETIC POLE FIXING DEVICE OF PERMANENT MAGNET WIND POWER GENERATOR AND PERMANENT MAGNET WIND POWER GENERATOR**
MAGNETMASTBEFESTIGUNGSVORRICHTUNG FÜR EINEN PERMANENTMAGNETWINDGENERATOR UND PERMANENTMAGNETGENERATOR
DISPOSITIF DE FIXATION DE PÔLES MAGNÉTIQUES DE GÉNÉRATEUR DE PUISSANCE ÉOLIENNE À AIMANTS PERMANENTS ET GÉNÉRATEUR DE PUISSANCE ÉOLIENNE À AIMANTS PERMANENTS

(30) Priority: 11.04.2019 CN 201910288938
(43) Date of publication of application: 16.02.2022
(73) Proprietor: Zhejiang University, Hangzhou, Zhejiang 310058 (CN); Shanghai Electric Wind Power Group Co., Ltd., Shanghai 200241 (CN)
(72) Inventor: WU, Lijian, Hangzhou, Zhejiang 310058 (CN); LIU, Junwei, Hangzhou, Zhejiang 310058 (CN); WANG, Sixiang, Hangzhou, Zhejiang 310058 (CN); WANG, Jiangqiao, Hangzhou, Zhejiang 310058 (CN); WEN, Hui, Hangzhou, Zhejiang 310058 (CN); FANG, Youtong, Hangzhou, Zhejiang 310058 (CN)
(74) Representative: Bandpay & Greuter
(86) International application number: PCT/CN2020/079492
(87) International publication number: WO 2020/207199

(56) References cited:
- EP-A1- 2 930 824
- EP-A1- 3 021 458
- CN-A- 101 478 186
- CN-A- 105 071 571
- CN-A- 105 186 743
- CN-A- 108 777 521
- CN-A- 108 964 310
- CN-A- 109 921 533
- CN-U- 201 860 190
- CN-U- 206 977 176
- CN-U- 206 977 176
- CN-U- 208 174 385
- DE-A1- 102004 031 329
- US-A1- 2011 285 216

## Description

### TECHNICAL FIELD

The present disclosure relates to the field of wind power generation, in particular to a magnetic pole fixing device of a permanent magnet wind power generator and a permanent magnet wind power generator.

### BACKGROUND

A plurality of permanent magnets are mounted on a rotor of a large-size permanent magnet wind power generator, where the permanent magnets of rare earth such as NdFeB (Neodymium-Iron-Boron) are taken as its magnetic pole. When the power generator is in operation, the permanent magnet may easily fall off from the rotor due to various factors such as temperature, humidity, vibration and alternating electromagnetic force in the working environment, thus affecting safe and reliable operation of the power generator. Therefore, the fixing and encapsulating manner of a magnetic steel of the rotor of the permanent magnet wind power generator is very critical.

A common permanent magnet fixing and encapsulating method at present is described below: after a permanent magnet and a rotor are assembled together, a glass fiber cloth is adhered to a surface of a magnetic pole, and then epoxy resin filling is performed for the magnetic pole by vacuum glue injection. After the resin is cured, the glass fiber cloth and the surface of the magnetic pole are bonded integrally to fix and protect the permanent magnet. In this manner, the structure is simpler and material costs are lower. However, because the epoxy resin has a high viscosity, the epoxy resin will encounter a large resistance when passing through a flow channel and thus air cannot be completely expelled smoothly. Further, faults may easily occur to a surface and an interior of an anti-corrosion layer. In this case, moisture in the air may enter the interior of the magnetic pole, and the permanent magnet may be corroded or pulverized, and finally fall off from the rotor and enter into air gap. In this case, chamber-sweeping may occur to the power generator and even the entire power generator may be damaged. Another common permanent magnet fixing method is described below: a permanent magnet is encapsulated in a magnetic pole module box, radial holes are opened respectively on the magnetic pole module box and a rotor, and then the magnetic pole module box is radially fixed on the rotor using bolts. This method is easy to operate but has many defects: the magnetic pole module box must be mounted before the rotor and a stator are assembled, and assembly difficulty is greatly increased due to the strongly-magnetic permanent magnet; the strong magnetism of the magnetic pole module leads to its positioning difficulty and low mounting efficiency, and thus the magnetic pole module can be accurately mounted to a designated position only by experienced technicians with proper tools; when the power generator is in operation, a strong tangential force received by the magnetic pole module must be completely borne by bolts such that a large number of bolts and matching bolt holes should be provided; further, there is a possibility that the bolts may break after a long time of operation.

CN208174385U provides a generator rotor capable of fixing a magnetic pole module in an axial direction and a circumferential direction of a yoke, where the generator rotor includes: a yoke, a plurality of pressing strips, magnetic pole modules and stoppers. First, a stopper is placed at one end (e.g., the upper end) of two adjacent pressing strips along the axial direction of the yoke. Then, the first projections of the magnetic pole module are inserted into the mutually opposite concave portions of the two adjacent pressing strips and pushed in from the bottom upward until resting against the stopper. Finally, the assembly of the magnetic pole module is completed by fixing the other stopper on the magnetic yoke at the other end of the two adjacent pressing strips.

EP2930824A1 provides an outer rotor construction for the generator of a wind turbine. The outer rotor construction includes a plurality of rotor housing sections that closely fit together. Each magnet pole piece in EP 2930824A1 is mounted on a base plate accommodated in a specified shape slot of each rotor housing section.

CN105071571A provides a special-shaped magnetic steel component structure of wind power generator. The special-shaped magnetic steel component structure includes a special-shaped base plate, a magnetic steel, and a protective box. When the special-shaped magnetic steel component is installed, first pressing strips are pre-fixed on a rotor housing by bolts, the rotor housing is pre-punched with bolt holes, the magnetic steels are pushed between two columns of pressing strips through a magnetic steel component installation tooling, then the bolts are tightened.

To sum up, the magnetic pole fixing device of the permanent magnet wind power generator and the permanent magnet wind power generator in the prior art have the shortcomings of high assembly difficulty of the rotor and the stator, high mounting difficulty of the magnetic pole module and low long-term reliability of the magnetic pole module fixing device.

### SUMMARY

In order to solve the shortcomings of high mounting difficulty of a magnetic pole module and low long-term reliability of a magnetic pole module fixing device in the prior arts, the present disclosure provides a magnetic pole fixing device of a permanent magnet wind power generator and a permanent magnet wind power generator.

To solve the above technical problems, the present disclosure employs the following solutions.

Provided is a magnetic pole fixing device of a permanent magnet wind power generator as defined in claim 1, which is used to fix a plurality of magnetic pole modules on a rotor of the permanent magnet wind power generator.

In this solution, when one of the magnetic pole modules is located between adjacent two of the first fixing block assemblies, and the left second fixing block and the right second fixing block are embedded between adjacent two of the first fixing blocks of the corresponding first fixing block assembly, movements of the magnetic pole module along the circumferential direction and the axial direction of the rotor are both limited. A radial limiting assembly further limits the movement of the magnetic pole module along the radial direction of the rotor. In this way, one of the magnetic pole modules is fixedly and tightly mounted on the rotor, and easy to operate and dismount. In this case, the prior mounting can be easily performed and the subsequent maintenance and servicing are facilitated. The radial limiting assembly further limits the movement of the magnetic pole module along the axial direction of the rotor in addition to limiting the movement of the magnetic pole module along the radial direction of the rotor.

In this solution, a staggered disposal of the left second fixing block and the right second fixing block along the length direction of the magnetic pole module guarantees the fixing reliability of the magnetic pole module and the rotor and saves space.

In this solution, the magnetic pole module is mounted on the rotor by inserting the radial fastener into the second radial connection hole and the first radial connection hole in sequence.

In this solution, the magnetic pole module is mounted on the rotor by inserting the axial fastener into the first axial connection hole and the second axial connection hole.

In this solution, for adjacent two of the magnetic pole modules along the circumferential direction of the rotor, the left second fixing block of one of the adjacent two magnetic pole modules and the right second fixing block of the other of the adjacent two magnetic pole modules are stacked along the thickness direction of the magnetic pole module, such that space can be saved while the fixing reliability of the magnetic pole module and the rotor is guaranteed.

In this solution, the magnetic pole module is mounted on the rotor by inserting the radial fastener into the second radial connection hole and the first radial connection hole in sequence.

In this solution, for the adjacent two magnetic pole modules along the circumferential direction of the rotor, the sum of the thicknesses of the left second fixing block of one of the adjacent two magnetic pole modules and the right second fixing block of the other of the adjacent two magnetic pole modules is smaller than or equal to the thickness of the magnetic pole module, so as to guarantee the fixing reliability of the magnetic pole module and the rotor.

In this solution, when the first fixing block is a solid fixing block, the first fixing block may be welded to the side surface of the rotor adjacent to the air gap or integrally formed with the rotor by groove milling. Both of the two manners can realize the fixing of the first fixing block on the rotor easily and reliably, and the first fixing block has a higher strength than a radial bolt in the prior art, thus eliminating the possibility that the bolts may break after a long time of operation. When the first fixing block is not a solid fixing block, the first fixing block may be welded to the rotor by welding.

In this solution, the thickness of each of the left second fixing block and the right second fixing block is smaller than or equal to the thickness of the magnetic pole module to ensure the fixing reliability of the magnetic pole module and the rotor.

In this solution, the axial distance between the first fixing blocks may be set such that the left second fixing block and the right second fixing block of the magnetic pole module can both be embedded between adjacent two first fixing blocks of the corresponding first fixing block assembly.

Provided is a permanent magnet wind power generator as defined in claim 11.

The present disclosure has the following beneficial effects: in the present disclosure, a magnetic pole fixing device of a permanent magnet wind power generator different from the prior art is adopted, and a strong tangential force received by the magnetic pole module is borne by the first fixing block, thus avoiding the manufacturing difficulty brought about by the use of a large number of radial bolts for fixing the magnetic pole module in the prior art. Further, the first fixing blocks have a larger force-receiving area and receive force more uniformly. The first fixing blocks are preferably fixed to the rotor by welding or integrally formed with the rotor by groove milling, such that a first fixing block has a higher strength than that of a radial bolt of the prior art, effectively eliminating the possibility of bolt breakage. Furthermore, based on the fixing manner of the first fixing blocks, it is not required to mount a limiting device at an end of one column of axially-arranged magnetic pole modules. Further, each magnetic pole module is independently positioned by use of the first fixing blocks and the second fixing block assembly, thus facilitating the positioning and mounting and effectively solving the shortcomings of high mounting difficulty of magnetic pole module and low long-term reliability of the magnetic pole module fixing device in the prior art.

### BRIEF DESCRIPTION OF THE DRAWINGS

FIG. 1 is a structural schematic diagram of mounting a magnetic pole module on a rotor according to embodiment 1 of the present disclosure.
FIG. 2 is a structural schematic diagram of a magnetic pole module according to embodiment 1 of the present disclosure.
FIG. 3 is a structural schematic diagram of mounting a magnetic pole module on a rotor according to embodiment 2 of the present disclosure.
FIG. 4 is a structural schematic diagram of a magnetic pole module according to embodiment 2 of the present disclosure.
FIG. 5 is a structural schematic diagram of mounting a magnetic pole module on a rotor according to embodiment 3 of the present disclosure.
FIG. 6 is a structural schematic diagram of a magnetic pole module according to embodiment 3 of the present disclosure.
FIG. 7 is a structural schematic diagram of mounting a magnetic pole module on a rotor according to embodiment 4 of the present disclosure.
FIG. 8 is a structural schematic diagram of a magnetic pole module according to embodiment 4 of the present disclosure.

Numerals of the drawings are described below:
- 10: rotor
- 20: magnetic pole module
- 201: housing
- 2011: seat
- 2012: housing cover
- 202: permanent magnet
- 30: first fixing block assembly
- 301: first fixing block
- 40: second fixing block assembly
- 401: left second fixing block
- 402: right second fixing block
- 50: radial limiting assembly
- 501: first radial connection hole
- 502: second radial connection hole
- 503: first axial connection hole
- 504: second axial connection hole

### DETAILED DESCRIPTION OF THE EMBODIMENTS

The present disclosure will be further described below in combination with specific embodiments but not limited to these embodiments.

### Embodiment 1

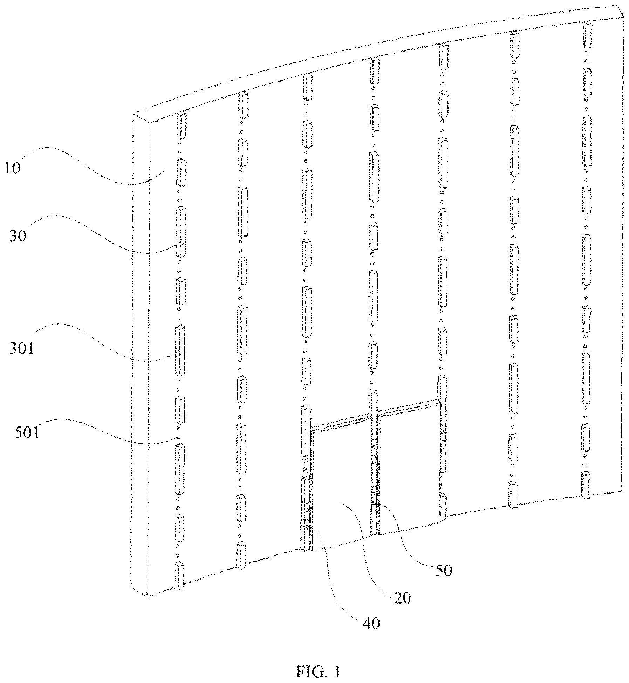

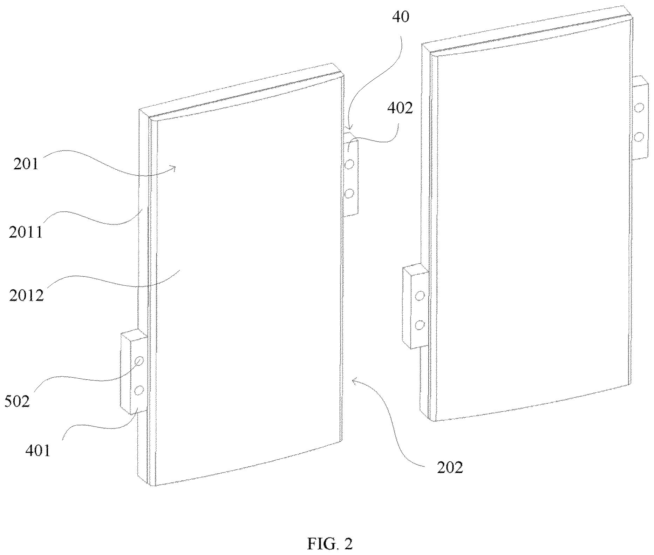

The present disclosure provides a magnetic pole fixing device of a permanent magnet wind power generator and a permanent magnet wind power generator to fix a magnetic pole module on a rotor. As shown in FIGS. 1-2, the magnetic pole fixing device includes a plurality of first fixing block assemblies 30, a plurality of second fixing block assemblies 40 and a plurality of radial limiting assemblies 50.

A plurality of first fixing block assemblies 30 are disposed on a side surface of a rotor 10 adjacent to an air gap and extend toward an exterior of the rotor 10, and the air gap is a gap between the rotor 10 and a stator. A plurality of first fixing block assemblies 30 are disposed along a circumferential direction of the rotor 10 and spaced apart from each other, a distance between two adjacent first fixing block assemblies 30 is equal to a width of the magnetic pole module 20, and each first fixing block assembly 30 includes a plurality of first fixing blocks 301 disposed along an axial direction of the rotor 10 and spaced apart from each other.

A plurality of second fixing block assemblies 40 are disposed at two opposing side surfaces of the magnetic pole module 20 respectively, each second fixing block assembly 40 includes one left second fixing block 401 and one right second fixing block 402, the left second fixing block 401 and the right second fixing block 402 are staggered along a length direction of the magnetic pole module 20, and the length direction of the magnetic pole module 20 is parallel to the axial direction of the rotor 10. The magnetic pole module 20 is accommodated between two adjacent first fixing block assemblies 30 which limit the movement of the magnetic pole module 20 accommodated therein along the circumferential direction of the rotor 10. The left second fixing block 401 and the right second fixing block 402 are embedded between two adjacent first fixing blocks 301 of the corresponding the first fixing block assembly 30, and the corresponding first fixing blocks 301 limit the movement of the magnetic pole module 20 along the axial direction of the rotor 10. In order to ensure the left second fixing block 401 and the right second fixing block 402 at two side surfaces of the magnetic pole module 20 can both be embedded between two adjacent first fixing blocks 301 included in the corresponding first fixing block assembly 30, a distance between two adjacent first fixing blocks 301 included in any first fixing block assembly 30 along the axial direction of the rotor 10 is smaller than 2/3 of the length of the magnetic pole module 20.

A strong tangential force received by the magnetic pole module 20 is borne by the first fixing block 301, thus avoiding manufacturing difficulty brought about by use of a large number of radial bolts in fixing the magnetic pole module 20 in the prior art. Furthermore, based on the fixing manner of the first fixing blocks 301, it is not required to mount a limiting device at an end of one column of axially-arranged magnetic pole modules 20. Further, each magnetic pole module 20 is independently positioned by use of the first fixing blocks 301 and the second fixing block assembly 40, thus facilitating the positioning and mounting.

The radial limiting assembly 50 is used to limit the movement of magnetic pole module 20 along a radial direction of the rotor 10. However, in addition to limiting the movement of the magnetic pole module 20 along the radial direction of the rotor 10, the radial limiting assembly 50 may further limit the movement of the magnetic pole module 20 along the axial direction of the rotor 10. The radial limiting assembly 50 includes a first radial connection hole 501, a second radial connection hole 502 and a radial fastener. The first radial connection hole 501 is disposed on the rotor 10 and located between two adjacent first fixing blocks 301 included in the corresponding fixing block assembly 30, and extends along the radial direction of the rotor 10. The second radial connection hole 502 is disposed on the second fixing block assembly 40 and extends along a thickness direction of the magnetic pole module 20. The thickness direction of the magnetic pole module 20 is parallel to the radial direction of the rotor 10. When the magnetic pole module 20 is accommodated in the rotor 10, the movement of the magnetic pole module 20 along the radial direction of the rotor 10 is limited by inserting the radial fastener into the second radial connection hole 502 and the first radial connection hole 501 in sequence. The radial fastener is mainly used to limit the movement of the magnetic pole module 20 along the radial direction of the rotor 10. Further, a radial inward force received by the magnetic pole module 20 is far smaller than the tangential force and only generated occasionally.

It is noted that the specific structure of the radial fastener is not provided in the embodiment. Therefore, those skilled in the art may use a well-known radial fastener in the prior art, for example, a bolt.

The first fixing block 301 is a solid fixing block which may be welded to the side surface of the rotor 10 adjacent to the air gap or integrally formed with the rotor 10 by groove milling. Both of the two manners can realize the fixing of the first fixing block 301 on the rotor 10 easily and reliably, and the first fixing block 301 has a larger force-receiving area and receives force more uniformly, and thus the first fixing block 301 has a higher strength than a radial bolt in the prior art, thus eliminating the possibility that the bolts may break after a long time of operation.

The magnetic pole module 20 includes a seat 2011, a housing cover 2012 and a permanent magnet 202. The seat 2011 and the housing cover 2012 are enclosed into a housing 201. The permanent magnet 202 is located inside the housing 201. The left second fixing block 401 and the right second fixing block 402 are integrally formed with the seat 2011. A thickness of each of the left second fixing block 401 and the right second fixing block 402 is smaller or equal to the thickness of the magnetic pole module 20, so as to ensure the fixing reliability of the magnetic pole module 20 and the rotor 10.

The permanent magnet wind power generator further includes a rotor 10 and a magnetic pole module 20 as well as the above magnetic pole fixing device.

### Embodiment 2

This embodiment is structurally identical to the embodiment 1 except that the number of the left second fixing blocks 401 and the right second fixing blocks 402 included in each second fixing block assembly 40 is different from that in the embodiment 1; the radial limiting assembly 50 is different from that in the embodiment 1; the thickness of the left second fixing block 401 and the right second fixing block 402 is different from that in the embodiment 1.

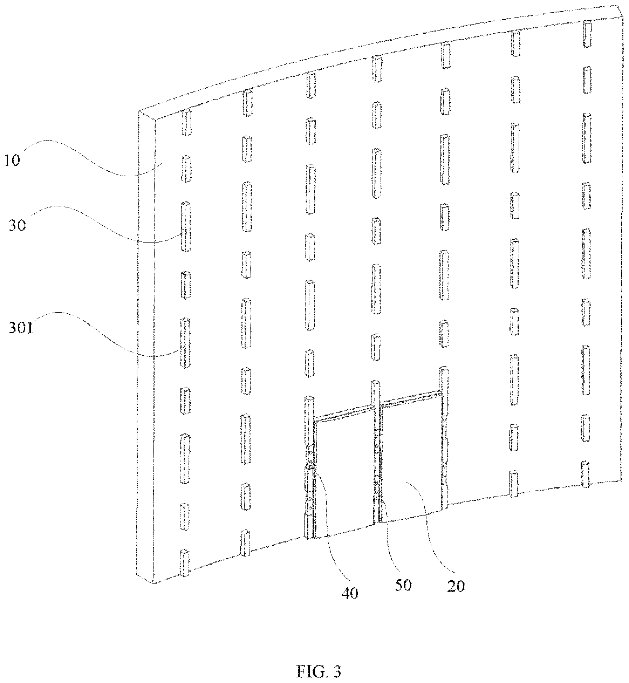

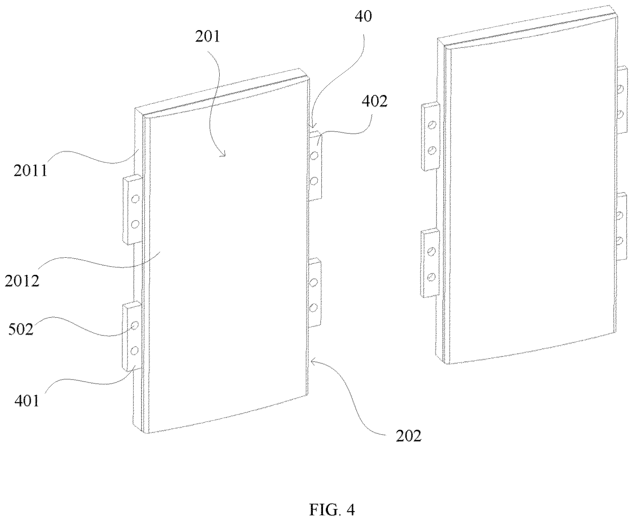

As shown in FIGS. 3-4, each second fixing block assembly 40 includes two left second fixing blocks 401 spaced apart along the length direction of the magnetic pole module 20 and two right second fixing blocks 402 spaced apart along the length direction of the magnetic pole module 20, and the left second fixing block 401 and the right second fixing block 402 are symmetrically disposed. For two adjacent magnetic pole modules 20 along the circumferential direction of the rotor 10, the left second fixing block 401 of one of the two adjacent magnetic pole modules 20 and the right second fixing block 402 of the other of the two adjacent magnetic pole modules 20 are stacked along the thickness direction of the magnetic pole module 20; the second radial connection hole 502 on the left second fixing block 401 of one of the two adjacent magnetic pole modules 20 and the second radial connection hole 502 on the right second fixing block 402 of the other of the two adjacent magnetic pole modules 20 are overlapped.

The radial limiting assembly 50 includes the second radial connection hole 502 and a radial fastener. For two adjacent magnetic pole modules 20 along the circumferential direction of the rotor 10, one second radial connection hole 502 is disposed on the left second fixing block 401 of one of the two adjacent magnetic pole modules 20 and the other second radial connection hole 502 is disposed on the right second fixing block 402 of the other of the two adjacent magnetic pole modules 20, and the second radial connection holes 502 extend along the thickness direction of the magnetic pole module 20. The movement of the magnetic pole module 20 along the radial direction of the rotor 10 is limited by inserting the radial fastener into the second radial connection hole 502 on the left second fixing block 401 of one magnetic pole module 20 and the second radial connection hole 502 on the right second fixing block 402 of the adjacent magnetic pole module 20. In this embodiment, the radial limiting assembly 50 is not limited to the second radial connection hole 502 and the radial fastener, and may also include a corresponding first radial connection hole 501 disposed on the rotor 10, where the first radial connection hole 501 is overlapped with the second radial connection hole 502. This way, the movement of the magnetic pole module 20 along the radial direction of the rotor 10 is limited by inserting the radial fastener into the second radial connection hole 502 and the first radial connection hole 501 in sequence, such that the magnetic pole module 20 is more stably fixed on the rotor 10.

For two adjacent magnetic pole modules 20 along the circumferential direction of the rotor 10, a sum of thicknesses of the left second fixing block 401 of one of the two adjacent magnetic pole modules 20 and the right second fixing block 402 of the other of the two adjacent magnetic pole modules 20 is smaller or equal to a thickness of the magnetic pole module 20, so as to ensure the fixing reliability of the magnetic pole module 20 and the rotor 10.

### Embodiment 3

The embodiment is structurally identical to the embodiment 1 except that the radial limiting assembly 50 is different from that in the embodiment 1. The radial connection in the embodiment 1 is changed to an axial connection to limit the movement of the magnetic pole module 20 along the radial direction of the rotor 10; the manners of fixing the first fixing block 301 on the rotor 10 are fewer.

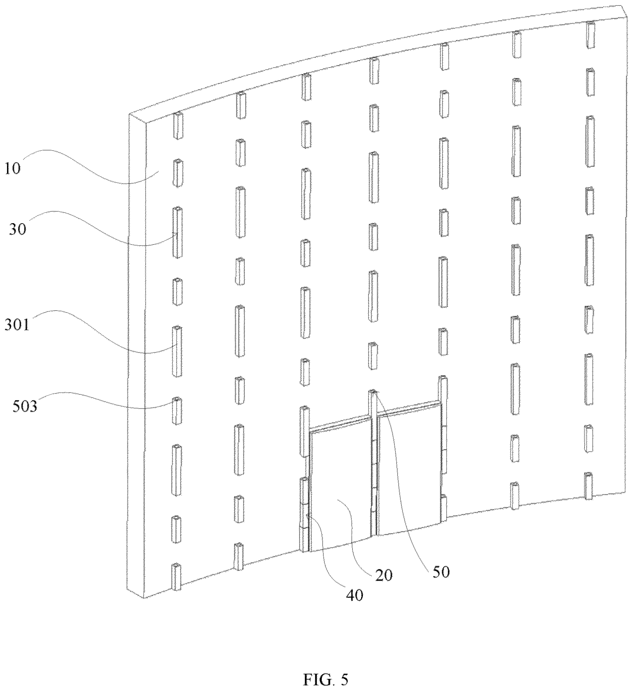

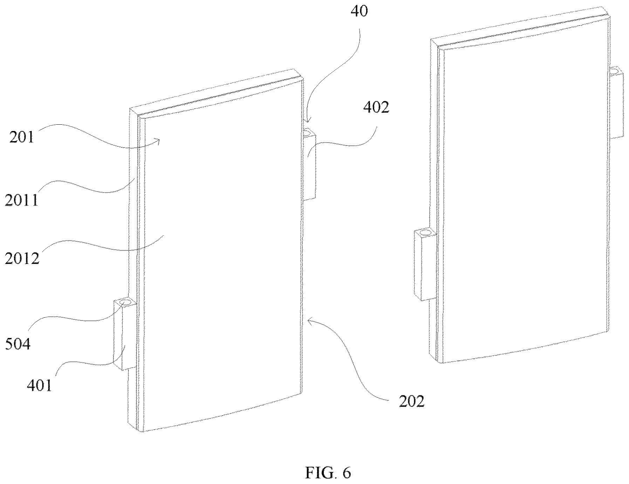

As shown in FIGS. 5-6, the radial limiting assembly 50 includes a first axial connection hole 503, a second axial connection hole 504, and an axial fastener. The first axial connection hole 503 is disposed on the first fixing block 301 and extends along the axial direction of the rotor 10. The second axial connection hole 504 is disposed on the second fixing block assembly 40 and extends along the length direction of the magnetic pole module 20. The movement of the magnetic pole module 20 along the radial direction of the rotor 10 is limited by inserting the axial fastener into the first axial connection hole 503 and the second axial connection hole 504.

The first fixing block 301 is a hollow fixing block which may be welded to the side surface of the rotor 10 adjacent to the air gap to achieve the fixing of the first fixing block 301 on the rotor 10. The first fixing block 301 has a larger force-receiving area and can receive force more uniformly, such that the first fixing block 301 has a higher strength than that of a radial bolt in the prior art, effectively avoiding the possibility that the bolt may break after a long time of operation.

### Embodiment 4

This embodiment is structurally identical to the embodiment 3 except that the number of the left second fixing blocks 401 and the right second fixing blocks 402 included in each second fixing block assembly 40 is different from that in the embodiment 3.

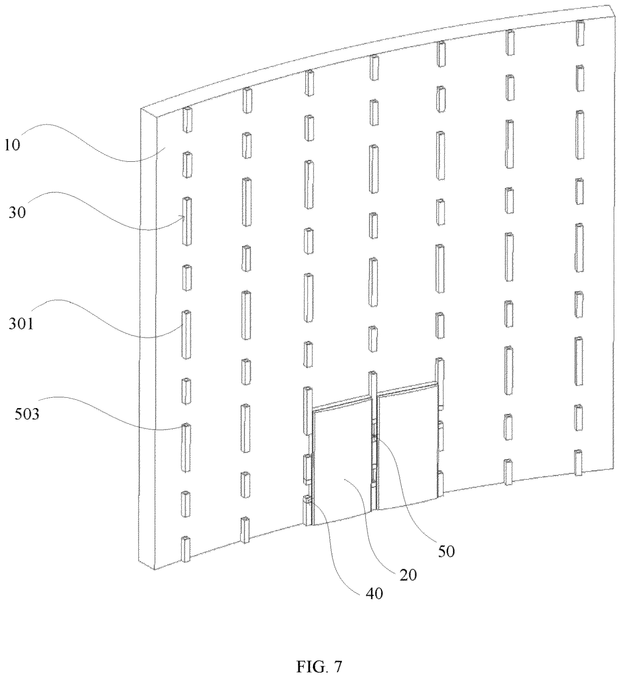

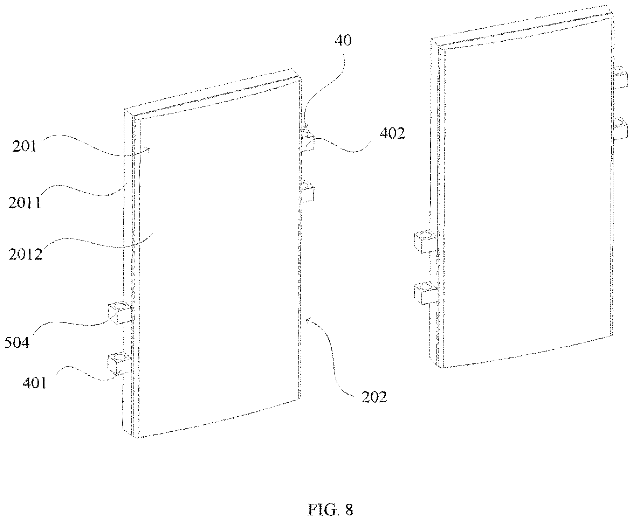

As shown in FIGS. 7-8, each second fixing block assembly 40 includes two left second fixing blocks 401 spaced apart along the length direction of the magnetic pole module 20 and two right second fixing blocks 402 spaced apart along the length direction of the magnetic pole module 20.

The movement of the magnetic pole module 20 along the radial direction of the rotor 10 is limited by inserting the axial fastener into the second axial connection hole 504 of the magnetic pole module 20 and the first axial connection hole 503 in sequence. Although the above descriptions are made to the specific embodiments of the present disclosure, those skilled in the art may understand that the above embodiments are merely illustrative and many variations and modifications may be made to these embodiments without departing from the principle and essence of the present disclosure. Therefore, the scope of protection of the present disclosure shall be defined by the appended claims.

## Claims

1. A magnetic pole fixing device of a permanent magnet wind power generator, for fixing a plurality of magnetic pole modules (20) on a rotor (10) of the permanent magnet wind power generator, wherein the magnetic pole fixing device of the permanent magnet wind power generator comprises:
a plurality of first fixing block assemblies (30), disposed on a surface of the rotor (10)adjacent to an air gap and extending toward an exterior of the rotor, wherein the plurality of first fixing block assemblies (30) are disposed along a circumferential direction of the rotor (10) and spaced apart from each other in said circumferential direction, and each of the first fixing block assemblies (30) comprises a plurality of first fixing blocks (301) disposed along an axial direction of the rotor (10) and spaced apart from each other in said axial direction;
a plurality of second fixing block assemblies (40), where each of the second fixing block assemblies (40) comprises at least one left second fixing block (401) and at least one right second fixing block (402), which are disposed at two opposing side surfaces of the magnetic pole module (20) respectively;
a plurality of radial limiting assemblies (50), configured to limit a movement of the magnetic pole modules (20) along a radial direction of the rotor (10);
wherein the air gap is a gap between the rotor (10) and a stator, an accommodation space for accommodating one of the magnetic pole modules (20) is formed between adjacent two of the first fixing block assemblies (30), and adjacent two of the first fixing block assemblies (30) limit a movement of the magnetic pole module (20) accommodated in the accommodation space along the circumferential direction of the rotor (10);
the left second fixing block (401) or the right second fixing block (402) is embedded between adjacent two of the first fixing blocks (301) in each of the first fixing block assemblies (30), to limit the movement of the magnetic pole module (20) along the axial direction of the rotor (10).

2. The magnetic pole fixing device of the permanent magnet wind power generator according to claim 1, wherein the left second fixing block (401) and the right second fixing block (402) are staggered along a length direction of the magnetic pole module (20).

3. The magnetic pole fixing device of the permanent magnet wind power generator according to claim 2, wherein each of the radial limiting assemblies (50) comprises:
a first radial connection hole (501), disposed on the rotor (10) and located between adjacent two of the first fixing blocks (301) in the first fixing block assembly (30), wherein the first radial connection hole (501) extends along the radial direction of the rotor (10);
a second radial connection hole (502), disposed on the second fixing block assembly (40), wherein the second radial connection hole (502) extends along a thickness direction of the magnetic pole module (20);
a radial fastener, inserted into the second radial connection hole (502) and the first radial connection hole (501);
wherein the length direction of the magnetic pole module (20) is parallel to the axial direction of the rotor (10), and the thickness direction of the magnetic pole module (20) is parallel to the radial direction of the rotor (10).

4. The magnetic pole fixing device of the permanent magnet wind power generator according to claim 2, wherein each of the radial limiting assemblies (50) comprises:
a first axial connection hole (503), disposed on the first fixing block (301), wherein the first axial connection hole (503) extends along the axial direction of the rotor (10);
a second axial connection hole (504), disposed on the second fixing block assembly (40), wherein the second axial connection hole (504) extends along the length direction of the magnetic pole module (20);
an axial fastener, inserted into the first axial connection hole (503) and the second axial connection hole (504);
wherein the length direction of the magnetic pole module (20) is parallel to the axial direction of the rotor (10).

5. The magnetic pole fixing device of the permanent magnet wind power generator according to claim 1, wherein for adjacent two of the magnetic pole modules (20) along the circumferential direction of the rotor (10), the left second fixing block (401) of one of the adjacent two magnetic pole modules (20) and the right second fixing block (402) of the other of the adjacent two magnetic pole modules (20) are stacked along a thickness direction of the magnetic pole module (20); a length direction of the magnetic pole module (20) is parallel to the axial direction of the rotor (10), and the thickness direction of the magnetic pole module (20) is parallel to the radial direction of the rotor (10).

6. The magnetic pole fixing device of the permanent magnet wind power generator according to claim 5, wherein each of the radial limiting assemblies (50) comprises:
a first radial connection hole (501), disposed on the rotor (10) and located between adjacent two of the first fixing blocks (301) in the first fixing block assembly (30), wherein the first radial connection hole (501) extends along the radial direction of the rotor (10);
a second radial connection hole (502), disposed on the second fixing block assembly (40), wherein for the adjacent two magnetic pole modules (20) along the circumferential direction of the rotor (10), the second radial connection hole (502) on the left second fixing block (401) of one of the adjacent two magnetic pole modules (20) and the second radial connection hole (502) on the right second fixing block (402) of the other of the adjacent two magnetic pole modules (20) are overlapped, and the second radial connection hole (502) extends along the thickness direction of the magnetic pole module (20);
a radial fastener, wherein for the adjacent two magnetic pole modules (20) along the circumferential direction of the rotor (10), the radial fastener is inserted into the second radial connection hole (502) on the left second fixing block (401) of one of the adjacent two magnetic pole modules (20) and the second radial connection hole (502) on the right second fixing block (402) of the other of the adjacent two magnetic pole modules (20).

7. The magnetic pole fixing device of the permanent magnet wind power generator according to claim 6, wherein for the adjacent two magnetic pole modules (20) along the circumferential direction of the rotor (10), a sum of thicknesses of the left second fixing block (401) of one of the adjacent two magnetic pole modules (20) and the right second fixing block (402) of the other of the adjacent two magnetic pole modules (20) is smaller than or equal to a thickness of the magnetic pole module (20).

8. The magnetic pole fixing device of the permanent magnet wind power generator according to any one of claims 1 to 7, wherein the first fixing block (301) is welded to a side surface of the rotor (10) adj acent to the air gap or integrally formed with the rotor (10) by groove milling.

9. The magnetic pole fixing device of the permanent magnet wind power generator according to any one of claims 1 to 8, wherein the magnetic pole module (20) comprises a seat (2011), a housing cover (2012), and a permanent magnet (202), the seat (2011) and the housing cover (2012) are enclosed into a housing (201), the permanent magnet (202) is located inside the housing (201), and the left second fixing block (401) and the right second fixing block (402) are disposed at side surfaces of the housing (201) respectively and integrally formed with the seat (2011);
a thickness of each of the left second fixing block (401) and the right second fixing block (402) is smaller than or equal to a thickness of the magnetic pole module (20), a length direction of the magnetic pole module (20) is parallel to the axial direction of the rotor (10), and a thickness direction of the magnetic pole module (20) is parallel to the radial direction of the rotor (10).

10. The magnetic pole fixing device of the permanent magnet wind power generator according to any one of claims 1 to 9, wherein a distance between adjacent two of the first fixing blocks (301) in any one of the first fixing block assemblies (30) along the axial direction of the rotor (10) is smaller than 2/3 of a length of the magnetic pole module (20).

11. A permanent magnet wind power generator, comprising a magnetic pole module (20) and a rotor (10), wherein the permanent magnet wind power generator further comprises the magnetic pole fixing device of the permanent magnet wind power generator according to any one of claims 1 to 10.

## Patentansprüche

1. Magnetpolbefestigungsvorrichtung eines Permanentmagnet-Windkraftgenerators zum Befestigen einer Vielzahl von Magnetpolmodulen (20) an einem Rotor (10) des Permanentmagnet-Windkraftgenerators, wobei die Magnetpolbefestigungsvorrichtung des Permanentmagnet-Windkraftgenerators Folgendes umfasst:
eine Vielzahl von ersten Befestigungsblockanordnungen (30), die auf einer Oberfläche des Rotors (10) angrenzend an einen Luftspalt angeordnet sind und sich in Richtung einer Außenseite des Rotors erstrecken, wobei die Vielzahl von ersten Befestigungsblockanordnungen (30) entlang einer Umfangsrichtung des Rotors (10) angeordnet sind und in dieser Umfangsrichtung voneinander beabstandet sind, und jede der ersten Befestigungsblockanordnungen (30) eine Vielzahl von ersten Befestigungsblöcken (301) umfasst, die entlang einer axialen Richtung des Rotors (10) angeordnet und in dieser axialen Richtung voneinander beabstandet sind;
eine Vielzahl von zweiten Befestigungsblockanordnungen (40), wobei jede der zweiten Befestigungsblockanordnungen (40) mindestens einen linken zweiten Befestigungsblock (401) und mindestens einen rechten zweiten Befestigungsblock (402) umfasst, die jeweils an zwei gegenüberliegenden Seitenflächen des Magnetpolmoduls (20) angeordnet sind;
eine Vielzahl von radialen Begrenzungsanordnungen (50), die konfiguriert sind, um eine Bewegung der Magnetpolmodule (20) entlang einer radialen Richtung des Rotors (10) zu begrenzen;
wobei der Luftspalt ein Spalt zwischen dem Rotor (10) und einem Stator ist, ein Aufnahmeraum zum Aufnehmen eines der Magnetpolmodule (20) zwischen angrenzenden zwei der ersten Befestigungsblockanordnungen (30) gebildet ist, und angrenzende zwei der ersten Befestigungsblockanordnungen (30) eine Bewegung des Magnetpolmoduls (20), das in dem Aufnahmeraum aufgenommen ist, entlang der Umfangsrichtung des Rotors (10) begrenzen;
der linke zweite Befestigungsblock (401) oder der rechte zweite Befestigungsblock (402) zwischen angrenzenden zwei ersten Befestigungsblöcken (301) in jeder der ersten Befestigungsblockanordnungen (30) eingebettet ist, um die Bewegung des Magnetpolmoduls (20) entlang der axialen Richtung des Rotors (10) zu begrenzen.

2. Magnetpolbefestigungsvorrichtung des Permanentmagnet-Windkraftgenerators nach Anspruch 1, wobei der linke zweite Befestigungsblock (401) und der rechte zweite Befestigungsblock (402) entlang einer Längsrichtung des Magnetpolmoduls (20) versetzt sind.

3. Magnetpolbefestigungsvorrichtung des Permanentmagnet-Windkraftgenerators nach Anspruch 2, wobei jede der radialen Begrenzungsanordnungen (50) Folgendes umfasst:
ein erstes radiales Verbindungsloch (501), das an dem Rotor (10) angeordnet ist und sich zwischen angrenzenden zwei der ersten Befestigungsblöcke (301) in der ersten Befestigungsblockanordnung (30) befindet, wobei sich das erste radiale Verbindungsloch (501) entlang der radialen Richtung des Rotors (10) erstreckt;
ein zweites radiales Verbindungsloch (502), das an der zweiten Befestigungsblockanordnung (40) angeordnet ist, wobei sich das zweite radiale Verbindungsloch (502) entlang einer Stärkerichtung des Magnetpolmoduls (20) erstreckt;
ein radiales Befestigungselement, das in das zweite radiale Verbindungsloch (502) und das erste radiale Verbindungsloch (501) eingeführt ist;
wobei die Längsrichtung des Magnetpolmoduls (20) parallel zu der axialen Richtung des Rotors (10) ist und die Stärkerichtung des Magnetpolmoduls (20) parallel zu der radialen Richtung des Rotors (10) ist.

4. Magnetpolbefestigungsvorrichtung des Permanentmagnet-Windkraftgenerators nach Anspruch 2, wobei jede der radialen Begrenzungsanordnungen (50) Folgendes umfasst:
ein erstes axiales Verbindungsloch (503), das an dem ersten Befestigungsblock (301) angeordnet ist, wobei sich das erste axiale Verbindungsloch (503) entlang der axialen Richtung des Rotors (10) erstreckt;
ein zweites axiales Verbindungsloch (504), das an der zweiten Befestigungsblockanordnung (40) angeordnet ist, wobei sich das zweite axiale Verbindungsloch (504) entlang der Längsrichtung des Magnetpolmoduls (20) erstreckt;
ein axiales Befestigungselement, das in das erste axiale Verbindungsloch (503) und das zweite axiale Verbindungsloch (504) eingeführt ist;
wobei die Längsrichtung des Magnetpolmoduls (20) parallel zu der axialen Richtung des Rotors (10) ist.

5. Magnetpolbefestigungsvorrichtung des Permanentmagnet-Windkraftgenerators nach Anspruch 1, wobei für angrenzende zwei Magnetpolmodule (20) entlang der Umfangsrichtung des Rotors (10) der linke zweite Befestigungsblock (401) von einem der angrenzenden zwei Magnetpolmodule (20) und der rechte zweite Befestigungsblock (402) von dem anderen der angrenzenden zwei Magnetpolmodule (20) entlang einer Stärkerichtung des Magnetpolmoduls (20) gestapelt sind; wobei eine Längsrichtung des Magnetpolmoduls (20) parallel zu der axialen Richtung des Rotors (10) ist und die Stärkerichtung des Magnetpolmoduls (20) parallel zu der radialen Richtung des Rotors (10) ist.

6. Magnetpolbefestigungsvorrichtung des Permanentmagnet-Windkraftgenerators nach Anspruch 5, wobei jede der radialen Begrenzungsanordnungen (50) Folgendes umfasst:
ein erstes radiales Verbindungsloch (501), das an dem Rotor (10) angeordnet ist und sich zwischen angrenzenden zwei der ersten Befestigungsblöcke (301) in der ersten Befestigungsblockanordnung (30) befindet, wobei sich das erste radiale Verbindungsloch (501) entlang der radialen Richtung des Rotors (10) erstreckt;
ein zweites radiales Verbindungsloch (502), das an der zweiten Befestigungsblockanordnung (40) angeordnet ist, wobei für die angrenzenden zwei Magnetpolmodule (20) entlang der Umfangsrichtung des Rotors (10), das zweite radiale Verbindungsloch (502) an dem linken zweiten Befestigungsblock (401) von einem der angrenzenden zwei Magnetpolmodule (20) und das zweite radiale Verbindungsloch (502) an dem rechten zweiten Befestigungsblock (402) des anderen von den angrenzenden zwei Magnetpolmodulen (20) überlappt werden und sich das zweite radiale Verbindungsloch (502) entlang der Stärkerichtung des Magnetpolmoduls (20) erstreckt;
ein radiales Befestigungselement, wobei für die angrenzenden zwei Magnetpolmodule (20) entlang der Umfangsrichtung des Rotors (10) das radiale Befestigungselement in das zweite radiale Verbindungsloch (502) an dem linken zweiten Befestigungsblock (401) von einem der angrenzenden zwei Magnetpolmodule (20) und in das zweite radiale Verbindungsloch (502) an dem rechten zweiten Befestigungsblock (402) des anderen von den angrenzenden zwei Magnetpolmodulen (20) eingesetzt ist.

7. Magnetpolbefestigungsvorrichtung des Permanentmagnet-Windkraftgenerators nach Anspruch 6, wobei für die angrenzenden zwei Magnetpolmodule (20) entlang der Umfangsrichtung des Rotors (10) eine Summe der Stärken des linken zweiten Befestigungsblocks (401) von einem der angrenzenden zwei Magnetpolmodule (20) und des rechten zweiten Befestigungsblocks (402) von dem anderen der angrenzenden zwei Magnetpolmodule (20) kleiner als oder gleich wie eine Stärke des Magnetpolmoduls (20) ist.

8. Magnetpolbefestigungsvorrichtung des Permanentmagnet-Windkraftgenerators nach einem der Ansprüche 1 bis 7, wobei der erste Befestigungsblock (301) an eine Seitenfläche des Rotors (10) angrenzend an den Luftspalt geschweißt oder durch Nutenfräsen einstückig mit dem Rotor (10) gebildet ist.

9. Magnetpolbefestigungsvorrichtung des Permanentmagnet-Windkraftgenerators nach einem der Ansprüche 1 bis 8, wobei das Magnetpolmodul (20) einen Sitz (2011), eine Gehäuseabdeckung (2012) und einen Permanentmagneten (202) umfasst, der Sitz (2011) und die Gehäuseabdeckung (2012) in ein Gehäuse (201) eingeschlossen sind, sich der Permanentmagnet (202) innerhalb des Gehäuses (201) befindet und der linke zweite Befestigungsblock (401) und der rechte zweite Befestigungsblock (402) jeweils an Seitenflächen des Gehäuses (201) angeordnet und einstückig mit dem Sitz (2011) gebildet sind;
eine Stärke von jedem von dem linken zweiten Befestigungsblock (401) und dem rechten zweiten Befestigungsblock (402) kleiner als oder gleich wie eine Stärke des Magnetpolmoduls (20) ist, eine Längsrichtung des Magnetpolmoduls (20) parallel zu der axialen Richtung des Rotors (10) ist und eine Stärkerichtung des Magnetpolmoduls (20) parallel zu der radialen Richtung des Rotors (10) ist.

10. Magnetpolbefestigungsvorrichtung des Permanentmagnet-Windkraftgenerators nach einem der Ansprüche 1 bis 9, wobei ein Abstand zwischen angrenzenden zwei der ersten Befestigungsblöcke (301) in einer beliebigen von den ersten Befestigungsblockanordnungen (30) entlang der axialen Richtung des Rotors (10) kleiner als 2/3 einer Länge des Magnetpolmoduls (20) ist.

11. Permanentmagnet-Windkraftgenerator, umfassend ein Magnetpolmodul (20) und einen Rotor (10), wobei der Permanentmagnet-Windkraftgenerator ferner die Magnetpolbefestigungsvorrichtung des Permanentmagnet-Windkraftgenerators nach einem der Ansprüche 1 bis 10 umfasst.

## Revendications

1. Dispositif de fixation de pôles magnétiques d'une éolienne à aimant permanent, pour la fixation d'une pluralité de modules de pôles magnétiques (20) sur un rotor (10) de l'éolienne à aimant permanent, dans lequel le dispositif de fixation de pôles magnétiques de l'éolienne à aimant permanent comprend :
une pluralité de premiers ensembles de blocs de fixation (30), disposés sur une surface du rotor (10) adjacente à un entrefer et s'étendant en direction d'un extérieur du rotor, dans lequel la pluralité de premiers ensembles de blocs de fixation (30) sont disposés le long d'une direction circonférentielle du rotor (10) et espacés les uns des autres dans ladite direction circonférentielle, et chacun des premiers ensembles de blocs de fixation (30) comprend une pluralité de premiers blocs de fixation (301) disposés le long d'une direction axiale du rotor (10) et espacés les uns des autres dans ladite direction axiale ;
une pluralité de deuxièmes ensembles de blocs de fixation (40), chacun des deuxièmes ensembles de blocs de fixation (40) comprenant au moins un deuxième bloc de fixation gauche (401) et au moins un deuxième bloc de fixation droit (402), qui sont disposés sur deux surfaces latérales opposées du module de pôle magnétique (20) respectivement ;
une pluralité d'ensembles de limitation radiale (50), conçus pour limiter un mouvement des modules de pôles magnétiques (20) le long d'une direction radiale du rotor (10) ;
dans lequel l'entrefer est un interstice entre le rotor (10) et un stator, un espace de logement pour le logement d'un des modules de pôles magnétiques (20) est formé entre deux ensembles adjacents parmi les premiers ensembles de blocs de fixation (30), et deux ensembles adjacents parmi les premiers ensembles de blocs de fixation (30) limitent un mouvement du module de pôle magnétique (20) logé dans l'espace de logement le long de la direction circonférentielle du rotor (10) ;
le deuxième bloc de fixation gauche (401) ou le deuxième bloc de fixation droit (402) est intégré entre deux blocs adjacents parmi les premiers blocs de fixation (301) dans chacun des premiers ensembles de blocs de fixation (30), afin de limiter le mouvement du module de pôle magnétique (20) le long de la direction axiale du rotor (10).

2. Dispositif de fixation de pôles magnétiques d'une éolienne à aimant permanent selon la revendication 1, dans lequel le deuxième bloc de fixation gauche (401) et le deuxième bloc de fixation droit (402) sont décalés le long d'une direction de longueur du module de pôle magnétique (20).

3. Dispositif de fixation de pôles magnétiques d'une éolienne à aimant permanent selon la revendication 2, dans lequel chacun des ensembles de limitation radiale (50) comprend :
un premier trou de connexion radiale (501), disposé sur le rotor (10) et situé entre deux blocs adjacents parmi les premiers blocs de fixation (301) dans le premier ensemble de blocs de fixation (30), dans lequel le premier trou de connexion radiale (501) s'étend le long de la direction radiale du rotor (10) ;
un deuxième trou de connexion radiale (502), disposé sur le deuxième ensemble de blocs de fixation (40), dans lequel le deuxième trou de connexion radiale (502) s'étend le long de la direction de l'épaisseur du module de pôle magnétique (20) ;
un dispositif de fixation radial, inséré dans le deuxième trou de connexion radiale (502) et le premier trou de connexion radiale (501) ;
dans lequel la direction de la longueur du module de pôle magnétique (20) est parallèle à la direction axiale du rotor (10) et la direction de l'épaisseur du module de pôle magnétique (20) est parallèle à la direction radiale du rotor (10).

4. Dispositif de fixation de pôles magnétiques d'une éolienne à aimant permanent selon la revendication 2, dans lequel chacun des ensembles de limitation radiale (50) comprend :
un premier trou de connexion axiale (503), disposé sur le premier bloc de fixation (301), dans lequel le premier trou de connexion axiale (503) s'étend le long de la direction axiale du rotor (10) ;
un deuxième trou de connexion axiale (504), disposé sur le deuxième ensemble de blocs de fixation (40), dans lequel le deuxième trou de connexion axiale (504) s'étend le long de la direction de la longueur du module de pôle magnétique (20) ;
un dispositif de fixation axial, inséré dans le premier trou de connexion axiale (503) et le deuxième trou de connexion axiale (504) ;
dans lequel la direction de la longueur du module de pôle magnétique (20) est parallèle à la direction axiale du rotor (10).

5. Dispositif de fixation de pôles magnétiques d'une éolienne à aimant permanent selon la revendication 1, dans lequel, pour deux modules adjacents parmi les modules de pôles magnétiques (20) le long de la direction circonférentielle du rotor (10), le deuxième bloc de fixation gauche (401) d'un des deux modules de pôles magnétiques (20) adjacents et le deuxième bloc de fixation droit (402) de l'autre des deux modules adjacents parmi les modules de pôles magnétiques (20) adjacents sont empilés le long d'une direction de l'épaisseur du module de pôle magnétique (20) ; une direction de la longueur du module de pôle magnétique (20) est parallèle à la direction axiale du rotor (10) et la direction de l'épaisseur du module de pôle magnétique (20) est parallèle à la direction radiale du rotor (10).

6. Dispositif de fixation de pôles magnétiques d'une éolienne à aimant permanent selon la revendication 5, dans lequel chacun des ensembles de limitation radiale (50) comprend :
un premier trou de connexion radiale (501), disposé sur le rotor (10) et situé entre deux blocs adjacents parmi les premiers blocs de fixation (301) dans le premier ensemble de blocs de fixation (30), dans lequel le premier trou de connexion radiale (501) s'étend le long de la direction radiale du rotor (10) ;
un deuxième trou de connexion radiale (502), disposé sur le deuxième ensemble de blocs de fixation (40), dans lequel, pour les deux modules adjacents parmi les modules de pôles magnétiques (20) le long de la direction circonférentielle du rotor (10), le deuxième trou de connexion radiale (502) sur le deuxième bloc de fixation gauche (401) d'un des deux modules de pôles magnétiques (20) adjacents et le deuxième trou de connexion radiale (502) sur le deuxième bloc de fixation droit (402) de l'autre des deux modules de pôles magnétiques (20) adjacents sont superposés et le deuxième trou de connexion radiale (502) s'étend le long de la direction de l'épaisseur du module de pôle magnétique (20) ;
un dispositif de fixation radial, dans lequel, pour les deux modules adjacents parmi les modules de pôles magnétiques (20) le long de la direction circonférentielle du rotor (10), le dispositif de fixation radial est inséré dans le deuxième trou de connexion radiale (502) sur le deuxième bloc de fixation gauche (401) d'un des deux modules de pôles magnétiques (20) adjacents et le deuxième trou de connexion radiale (502) sur le deuxième bloc de fixation droit (402) de l'autre des deux modules de pôles magnétiques (20) adjacents.

7. Dispositif de fixation de pôles magnétiques d'une éolienne à aimant permanent selon la revendication 6, dans lequel, pour les deux modules de pôles magnétiques (20) adjacents le long de la direction circonférentielle du rotor (10), une somme d'épaisseurs du deuxième bloc de fixation gauche (401) d'un des deux modules de pôles magnétiques (20) adjacents et du deuxième bloc de fixation droit (402) de l'autre des deux modules de pôles magnétiques (20) adjacents est inférieure ou égale à une épaisseur du module de pôle magnétique (20).

8. Dispositif de fixation de pôles magnétiques d'une éolienne à aimant permanent selon l'une des revendications 1 à 7, dans lequel le premier bloc de fixation (301) est soudé à une surface latérale du rotor (10), de manière adjacente à l'entrefer ou formé d'une seule pièce avec le rotor (10) par fraisage de gorge.

9. Dispositif de fixation de pôles magnétiques d'une éolienne à aimant permanent selon l'une des revendications 1 à 8, dans lequel le module de pôle magnétique (20) comprend un siège (2011), un couvercle de boîtier (2012) et un aimant permanent (202), le siège (2011) et le couvercle de boîtier (2012) étant enfermés dans un boîtier (201), l'aimant permanent (202) étant situé à l'intérieur du boîtier (201) et le deuxième bloc de fixation gauche (401) et le deuxième bloc de fixation droit (402) sont disposés respectivement sur des surfaces latérales du boîtier (201) et formés d'une seule pièce avec le siège (2011) ;
une épaisseur de chaque bloc parmi le deuxième bloc de fixation gauche (401) et deuxième bloc de fixation droit (402) est inférieure ou égale à une épaisseur du module de pôle magnétique (20), une direction de longueur du module de pôle magnétique (20) est parallèle à la direction axiale du rotor (10) et une direction de l'épaisseur du module de pôle magnétique (20) est parallèle à la direction radiale du rotor (10).

10. Dispositif de fixation de pôles magnétiques d'une éolienne à aimant permanent selon l'une des revendications 1 à 9, dans lequel une distance entre deux blocs adjacents parmi les premiers blocs de fixation (301) dans un des premiers ensembles de blocs de fixation (30) le long de la direction axiale du rotor (10) est inférieure à 2/3 d'une longueur du module de pôle magnétique (20).

11. Éolienne à aimant permanent comprenant un module de pôle magnétique (20) et un rotor (10), dans lequel l'éolienne à aimant permanent comprend en outre le dispositif de fixation de pôles magnétiques de l'éolienne à aimant permanent selon l'une des revendications 1 à 10.
